# EUROPEAN PATENT APPLICATION

(11) **EP 4 733 955 A1**
(43) Date of publication of application: **29.04.2026**
(21) Application number: 24919872.2
(22) Date of filing: 18.11.2024
(51) Int. Cl.: G06F 16/903

(54) **METHOD FOR SEARCHING FOR INFORMATION, ELECTRONIC DEVICE, SERVER, SYSTEM, AND READABLE STORAGE MEDIUM**

(30) Priority: 22.01.2024 CN 202410089626
(71) Applicant: Huawei Technologies Co., Ltd., Shenzhen, Guangdong 518129 (CN)
(72) Inventor: XU, Tong, Shenzhen, Guangdong 518129 (CN); HU, Feng, Shenzhen, Guangdong 518129 (CN); AN, Hongfeng, Shenzhen, Guangdong 518129 (CN)
(74) Representative: Epping - Hermann - Fischer
(86) International application number: PCT/CN2024/132718
(87) International publication number: WO 2025/156792

(57) **Abstract**

Embodiments of this application provide an information search method, an electronic device, a server, a system, and a readable storage medium, and relate to the field of communication technologies. The method is applied to a first electronic device, and specifically includes: obtaining to-be-searched key information based on a first operation; sending, to at least one search source at a first moment, a search request used to search for the key information; receiving, in a plurality of receiving time periods from the first moment, a search result returned by the at least one search source based on the search request; and displaying, at an end of a search result display list when each receiving time period ends, a search result received in the receiving time period. According to the technical solution provided in embodiments, the first electronic device can display the received search result in time, and a jump of a display position of a displayed search result can also be avoided. This provides better user experience.

## Description

This application claims priority to Chinese Patent Application No. 202410089626.8, filed with the China National Intellectual Property Administration on January 22, 2024 and entitled "INFORMATION SEARCH METHOD, ELECTRONIC DEVICE, SERVER, SYSTEM, AND READABLE STORAGE MEDIUM", which is incorporated herein by reference in its entirety.

### TECHNICAL FIELD

This application relates to the field of communication technologies, and in particular, to an information search method, an electronic device, a server, a system, and a readable storage medium.

### BACKGROUND

With rapid development of communication technologies and increasing complexity of resource information, electronic devices such as mobile phones or tablet computers usually support a global search capability. To be specific, the electronic device may simultaneously perform search on different devices such as the local device, a server, and another electronic device based on a same user operation, to display more comprehensive and richer search results to a user, thereby improving user experience.

Currently, the electronic device usually displays the search results in an instant feedback+re-ranking+re-refreshing manner. To be specific, after each search result is received, all received search results are immediately re-ranked in a preset sequence, and the search results are displayed in a sequence obtained through ranking. For example, based on different search result sources, the search results are sequentially displayed on a display interface from top to bottom in a sequence of the local device, the server, and the another electronic device. However, because processing capabilities and communication quality of different search sources are usually different, time for returning search results by the search sources is usually different. It may be understood that, in the current display manner, if a display position of a search result received later is in a front, a display position of displayed content on the display interface jumps, affecting search experience of the user.

### SUMMARY

This application provides an information search method, an electronic device, a server, a system, and a readable storage medium, to resolve a problem in a conventional technology that a display position of displayed content may jump when a search result is displayed, which affects search experience of a user.

To achieve the foregoing objective, the following technical solutions are used in this application.

According to a first aspect, an embodiment of this application provides an information search method. The method is applied to a first electronic device, and specifically includes: obtaining to-be-searched key information based on a first operation; sending, to at least one search source at a first moment, a search request used to search for the key information; receiving, in a plurality of receiving time periods from the first moment, a search result returned by the at least one search source based on the search request; and displaying, at an end of a search result display list when each receiving time period ends, a search result received in the receiving time period.

For example, the first operation may be an operation of entering the key information and confirming the search by the user. The key information includes at least one of a text, a picture, and a voice.

According to the method provided in this embodiment, the first electronic device can sequentially display, on a display interface by using the receiving time period as a display unit, a search result in a corresponding receiving time period in descending order of the receiving time periods. It may be understood that, according to the method, it can be ensured that the first electronic device displays the received search result in time, and a jump of a display position of a displayed search result can also be avoided. This provides better user experience.

In some embodiments, after the to-be-searched key information is obtained based on the first operation, and before the search request used to search for the key information is sent to the at least one search source at the first moment, the method further includes: sending a first request to a server, where the first request is used to obtain a time information set corresponding to the key information, and the time information set is used to determine the plurality of receiving time periods of the search result; and receiving the time information set.

According to the method provided in this embodiment, the first electronic device can obtain different time information sets from the server for different key information, to provide personalized display solutions for the different key information.

In some embodiments, the time information set includes K time thresholds Tᵢ that are sequentially arranged in ascending order, i=1, 2, ..., K, and K is greater than or equal to 2 and is an integer; and based on a time threshold in the time information set, the plurality of receiving time periods determined by the first electronic device include (Tᵢ₋₁, Tᵢ], where T₀=0.

In some embodiments, the time information set includes a plurality of consecutive and non-overlapping receiving time periods (Tᵢ₋₁, Tᵢ], where i=1, 2, ..., K, K is greater than or equal to 2 and is an integer, and T₀=0.

In some embodiments, the search result includes a first search result, and the method further includes: determining a search delay for the first search result in response to a second operation for the first search result, where the search delay is a time difference between a receiving moment of the first search result and the first moment; and updating the time information set based on the search delay, where an updated time information set is used to determine a plurality of receiving time periods of a search result when the key information is searched next time.

According to the method provided in this embodiment, the first electronic device may optimize, based on an operation performed by the user on a search result, the time information set corresponding to the key information, to quickly display a search result that the user is interested in when the key information is searched next time, for example, the first search result in this embodiment, so as to improve user experience.

In some embodiments, updating the time information set based on the search delay includes: sending a third request to the server, where the third request carries a user identifier of the first electronic device and is used to request the server to update, based on the search delay, the time information set corresponding to the user identifier; and/or updating, based on the search delay, the time information set obtained by the first electronic device from the server.

According to the method provided in this embodiment, the first electronic device can update, based on a user behavior, the time information set that is stored locally and/or in the server by the user and that corresponds to the key information.

In some embodiments, when the time information set includes the time threshold, updating the time information set based on the search delay includes: adding the search delay as the time threshold to the time information set. It should be noted that an updated time information set needs to ensure that time thresholds are ranked in ascending order.

In some embodiments, the search source includes at least one of the first electronic device, a second electronic device, and the server, and the first electronic device is communicatively connected to the second electronic device.

In some embodiments, displaying, at the end of the search result display list when each receiving time period ends, the search result received in the receiving time period includes: when each receiving time period ends, determining, according to a ranking policy, a ranking result of the search result received in the receiving time period; and displaying, at the end of the search result display list based on the ranking result, the search result received in the receiving period.

In this embodiment, in a receiving time period, the first electronic device may display a search result more properly according to the ranking policy, for example, preferentially display a more important or more critical search result. This provides better user experience. In this embodiment, preferentially displaying a search result refers to: displaying the search result in a higher position than another search result in the receiving time period.

In some embodiments, the ranking policy includes a single-level ranking policy and a multi-level ranking policy. The single-level ranking policy includes one ranking factor. The multi-level ranking policy includes a plurality of ranking factors with different priorities.

In some embodiments, the ranking factors of the multi-level ranking policy sequentially include, in descending order of the priorities, a service type, a search correlation, a source device, and a search delay; and the search correlation indicates a degree of matching between the search result and the key information.

In some embodiments, the method further includes: sending a second request to the server, where the second request is used to obtain the ranking policy of the search result; and receiving the ranking policy.

In some embodiments, the search result includes a second search result, and the method further includes: determining a first label of the second search result in response to a third operation for the second search result; and sending a fourth request to the search source, where the fourth request includes the user identifier of the first electronic device, and the fourth request is used to request to improve the search correlation between the key information and the search result that corresponds to the user identifier and has the first label.

According to the method provided in this embodiment, when searching for the key information next time, the first electronic device may preferentially display a type of search result that the user is interested in, namely, the search result having the first label, to provide personalized display effect for the user and improve user experience.

According to a second aspect, an embodiment of this application provides an information search method. The method is applied to a server, and specifically includes: receiving a first request from a first electronic device, where the first request is used to obtain a time information set corresponding to to-be-searched key information, the time information set is used to determine a plurality of receiving time periods of a search result corresponding to the key information, and each receiving time period is used by the first electronic device to display, at an end of a search result display list when the receiving time period ends, a search result received in the receiving time period; and sending the time information set to the first electronic device.

In some embodiments, the method further includes: receiving a second request from the first electronic device, where the second request is used to obtain a ranking policy of the search result; and sending the ranking policy to the first electronic device.

In some embodiments, the method further includes: receiving a search request from the first electronic device, where the search request is used to request to search for the key information; determining a search result based on the key information; and sending the search result to the first electronic device.

In some embodiments, the method further includes: receiving a third request from the first electronic device, where the third request is used to request the server to update the time information set based on a search delay, and the search delay is a search delay of a first search result on which the second operation is performed; and updating the time information set based on the search delay.

In some embodiments, updating the time information set based on the search delay includes: when the time information set includes a time threshold, adding the search delay as the time threshold to the time information set.

In some embodiments, the method further includes: receiving a fourth request from the first electronic device, where the fourth request is used to request to improve a search correlation between the key information and a search result having a first label, the search correlation indicates a degree of matching between the search result and the key information, and the first label is label information of a second search result on which a third operation is performed.

According to a third aspect, an embodiment of this application provides an electronic device. The electronic device includes a memory, a processor, and a computer program that is stored in the memory and that is runnable on the processor. When executing the computer program, the processor implements the method shown in the first aspect.

According to a fourth aspect, an embodiment of this application provides a server. The server includes a memory, a processor, and a computer program that is stored in the memory and that is runnable on the processor. When executing the computer program, the processor implements the method shown in the second aspect.

According to a fifth aspect, an embodiment of this application provides a search system, including a first electronic device, at least one second electronic device, and a server. The first electronic device is configured to perform the method shown in the first aspect; the second electronic device is configured to perform search based on a search request from the first electronic device, and return a search result; and the server is configured to perform the method shown in the second aspect.

According to a sixth aspect, an embodiment of this application provides a computer-readable storage medium. The computer-readable storage medium stores a computer program. When the computer program is executed by a processor, the method shown in the first aspect or the second aspect is implemented.

According to a seventh aspect, an embodiment of this application provides a chip. The chip includes a processor and a memory, the memory stores a computer program, and when the computer program is executed by the processor, the method shown in the first aspect or the second aspect is implemented.

According to an eighth aspect, an embodiment of this application provides a computer program product. The computer program product stores a computer program, and the computer program can be run by a processor to implement the method shown in the first aspect or the second aspect.

It may be understood that, for beneficial effect of the second aspect to the eighth aspect, refer to the related descriptions in the first aspect. Details are not described herein again.

### BRIEF DESCRIPTION OF DRAWINGS

FIG. 1 is a diagram of a global search scenario according to an embodiment of this application;
FIG. 2 is a diagram of a process of displaying a search result in a global search process according to an embodiment of this application;
FIG. 3 is a diagram of a global search system to which an information search method is applicable according to an embodiment of this application;
FIG. 4 is a schematic flowchart of an information search method according to an embodiment of this application;
FIG. 5A and FIG. 5B are a schematic flowchart of an information search method according to an embodiment of this application;
FIG. 6 is a diagram of a process of displaying a search result according to an embodiment of this application;
FIG. 7A is a diagram of a service-level ranking policy according to an embodiment of this application;
FIG. 7B is a diagram of displaying a search result in a receiving time period according to an embodiment of this application;
FIG. 8 is a diagram of a search delay of a search result according to an embodiment of this application;
FIG. 9 is a diagram of displaying a search result according to an embodiment of this application;
FIG. 10 is a schematic flowchart of an information optimization method according to an embodiment of this application;
FIG. 11 is a diagram of displaying a search result before and after a time information set and a search correlation are optimized according to an embodiment of this application;
FIG. 12 is a diagram of displaying a search result according to another embodiment of this application;
FIG. 13 is a diagram of a structure of a first electronic device according to an embodiment of this application;
FIG. 14 is a diagram of a structure of a second electronic device according to an embodiment of this application;
FIG. 15 is a diagram of a structure of a server according to an embodiment of this application; and
FIG. 16 is a diagram of a structure of a chip according to an embodiment of this application.

### DESCRIPTION OF EMBODIMENTS

The following describes technical solutions provided in embodiments of this application with reference to the accompanying drawings.

It should be understood that, in descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists.

Terms "first" and "second" in embodiments are merely intended for a purpose of description, and shall not be understood as an indication or an implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

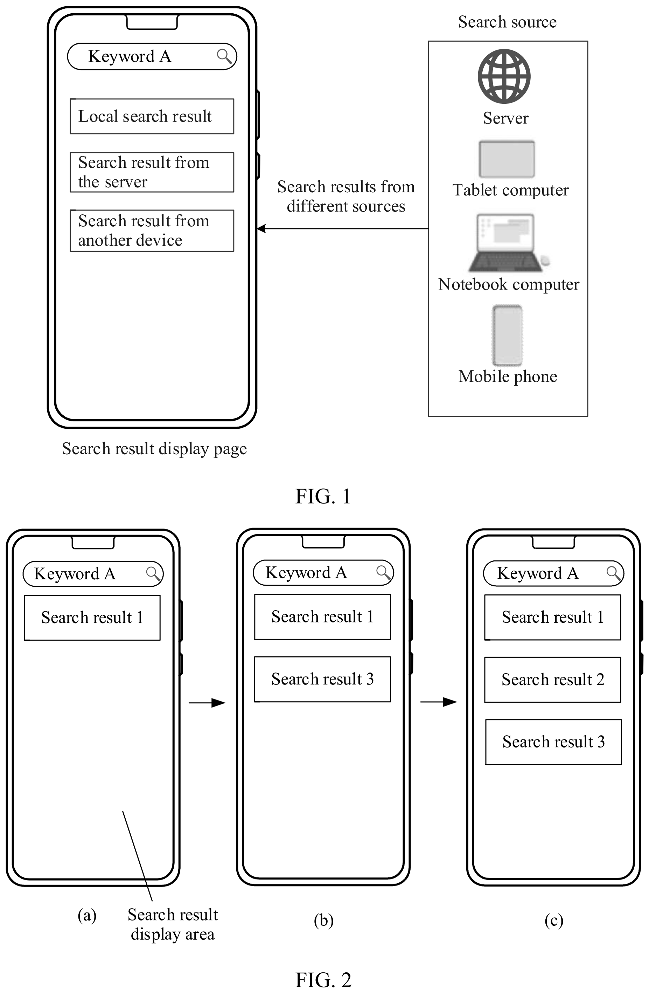

With rapid development of communication technologies and increasing complexity of resource information, electronic devices such as mobile phones or tablet computers usually support a global search capability. To be specific, based on a same user operation, for example, an operation of entering a keyword A and confirming search by a user, as shown in FIG. 1, the electronic device may simultaneously perform search on different search sources such as the local device, a server, and another electronic device, to obtain more comprehensive and richer search results from different sources, thereby improving user experience.

In some embodiments, the electronic device usually displays the search results in an "instant feedback+re-ranking+re-refreshing manner". To be specific, each time after receiving a search result, the electronic device immediately re-ranks all received search results according to a given ranking policy, and displays all the search results in a re-ranked sequence. However, because processing capabilities and communication quality of different search sources are usually different, time for returning search results by the search sources is usually different. It may be understood that, in this display manner, if a display position of a search result received later is in front of a displayed search result, when the electronic device displays the search result received later, a display position of the displayed search result jumps, affecting search experience of the user.

For example, priorities of search results in the ranking policy are sequentially a local search result, a search result from the server, and a search result from another device in descending order. In an embodiment, first, the electronic device receives a local search result 1, and displays the local search result 1 on a top of a search result display area, as shown in (a) in FIG. 2. Then, the electronic device receives a search result 3 returned by the server, and displays the search result 3 below the search result 1 according to the ranking policy, as shown in (b) in FIG. 2. Finally, the electronic device receives a search result 2 returned by a tablet computer, and displays the search result 2 between the search result 1 and the search result 3 according to the ranking policy, as shown in (c) in FIG. 2. It may be understood that, when the electronic device displays the search result 2, a display position of displayed content (namely, the search result 3) on a screen jumps, and user experience is poor.

In some other embodiments, after starting the search, the electronic device needs to wait for preset time (for example, 1s, 2s, or 3s), to receive sufficient search results, so as to simultaneously display the search results according to the ranking policy. Although this method can avoid the jump of the display position of the displayed content, waiting time of the user is long, and user experience is still poor.

Therefore, embodiments of this application provide an information search method. According to the method, a received search result can be quickly displayed in a global search process, and a jump of a display position of displayed content can be avoided. This helps improve search experience of a user.

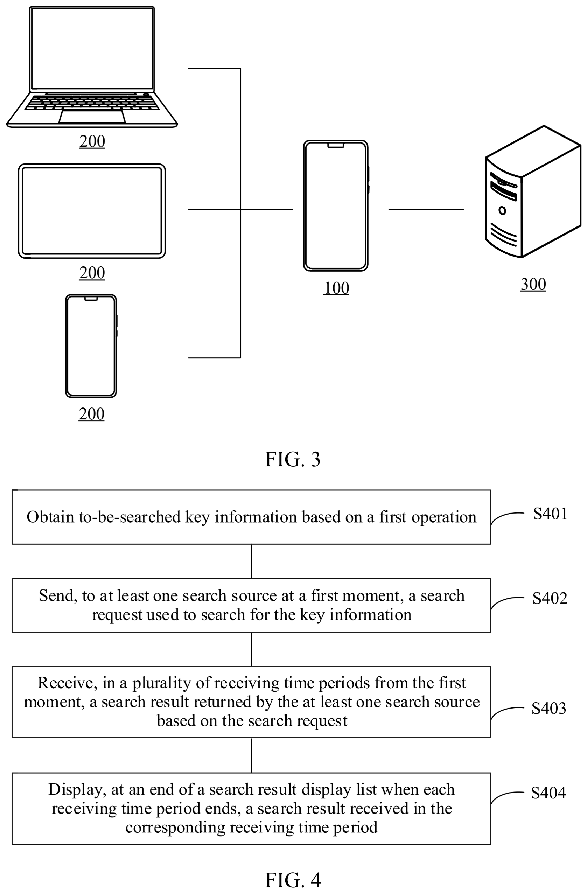

FIG. 3 is a diagram of a global search system to which the information search method is applicable according to an embodiment of this application. As shown in FIG. 3, the search system includes a first electronic device 100, at least one second electronic device 200, and a cloud server (hereinafter referred to as a server) 300. In the search system, the first electronic device 100 is communicatively connected to each second electronic device 200, and the first electronic device 100 is communicatively connected to the server 300.

The first electronic device 100 has a global search capability, and can obtain to-be-searched key information (for example, a keyword) based on a user operation, control the first electronic device to perform search on search sources such as the local device, the server, each second electronic device based on the key information, and receive and display a search result returned by each search source for the user to view.

The second electronic device 200 is an optional device in the global search system, and can perform discovery and interconnection with the first electronic device 100, determine, in resource information of the second electronic device based on a request of the first electronic device 100, a search result corresponding to the to-be-searched key information, and send the search result to the first electronic device 100.

The server 300 is an optional device in the global search system, and can manage a correspondence between the key information and a time information set, determine and send a search result based on the request of the first electronic device 100, update the time information set based on a user behavior, improve a search correlation of a search result that the user is interested in, and the like.

In this embodiment, electronic devices such as the first electronic device 100 and the second electronic device 200 each may be a mobile phone (mobile phone), a tablet computer (Pad), a smart television, a projector, a wearable device (for example, a smartwatch), a vehicle-mounted device, an augmented reality (augmented reality, AR)/virtual reality (virtual reality, VR) device, an ultra-mobile personal computer (ultra-mobile personal computer, UMPC), a netbook, a personal digital assistant (personal digital assistant, PDA), or the like. A specific type of the electronic device is not limited in embodiments of this application.

In addition, a communication connection between the first electronic device 100 and each second electronic device 200 and a communication connection between the first electronic device 100 and the server 300 may be wired connections or wireless connections. For example, the wireless connection includes a wireless fidelity (wireless fidelity, Wi-Fi) connection, a conventional Bluetooth (Bluetooth, BT) connection, an ultra-wideband (ultra-wideband, UWB) connection, a radio frequency (radio frequency, RF) connection, a cellular communication connection, or the like. The wireless connection includes a universal serial bus (universal serial bus, USB) connection, a network cable connection, or the like.

In conclusion, in the global search system, the first electronic device 100, each second electronic device 200, and the server 300 cooperate with each other to implement a global search function of the first electronic device.

With reference to the global search system, the following describes in detail a process of implementing the global search function provided in this embodiment.

FIG. 4 is a schematic flowchart of a search method according to an embodiment of this application. The method relates to a process in which a first electronic device sequentially displays search results on a display in a sequence of receiving time periods. Specifically, S401 to S404 are included.

S401: The first electronic device obtains to-be-searched key information based on a first operation.

For example, the first operation is an operation of entering the key information and confirming the search by a user. In addition, the key information includes a text, a picture, a voice, and the like.

S402: The first electronic device sends, to at least one search source at a first moment, a search request used to search for the key information.

In this embodiment, the search source is configured to determine and return a search result based on the key information in the search request. For example, the search source includes a local search module of the first electronic device, each second electronic device, a server, and the like. This is not limited in embodiments.

S403: The first electronic device receives, in a plurality of receiving time periods from the first moment, the search result returned by the at least one search source based on the search request, where the plurality of receiving time periods do not overlap.

S404: The first electronic device displays, at an end of a search result display list when each receiving time period ends, a search result received in the corresponding receiving time period. In other words, after sending the search request, the first electronic device displays, on the screen according to a ranking policy each time a receiving time period elapses, a search result received in the receiving time period.

The following specifically describes the information search method provided in this application with reference to the accompanying drawings.

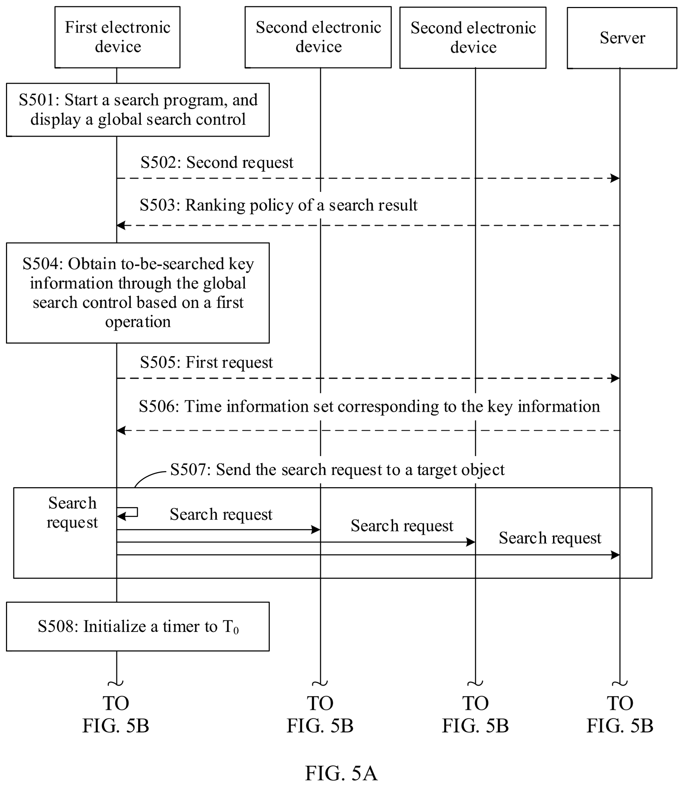

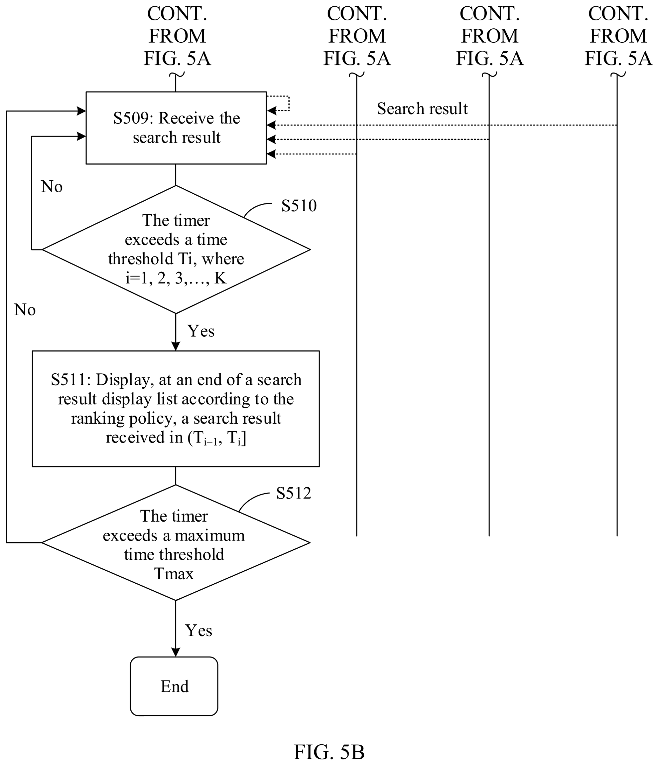

FIG. 5A and FIG. 5B are a schematic flowchart of an information search method according to an embodiment of this application. The method specifically includes S501 to S512.

S501: A first electronic device starts a search program, and displays a global search control.

In a process of starting the search program, the first electronic device can initialize a local related search service, for example, clear a historical buffered search result, to perform current search. The global search control is used to obtain to-be-searched key information. For example, the global search control may be, for example, the search boxes shown in FIG. 1 and FIG. 2.

S502: The first electronic device sends a second request to a server, where the second request is used to request a ranking policy of a search result.

S503: The server sends the ranking policy to the first electronic device based on the second request.

In this embodiment, the ranking policy is used to determine a search result display sequence. The ranking policy may be a single-level ranking policy determined based on a single factor, or may be a multi-level ranking policy determined based on a plurality of factors. For specific content of the ranking policy, refer to the following descriptions.

It should be noted that S502 and S503 are optional steps, that is, the first electronic device may alternatively use a locally preset ranking policy, and does not obtain the ranking policy from the server.

S504: The first electronic device obtains the to-be-searched key information through the global search control based on a first operation.

In this embodiment, based on the first operation, the user may enter a text, a voice, or a picture on the global search control, and confirm the search. The first electronic device determines the to-be-searched key information based on content entered by the user, for example, a keyword or a picture feature.

S505: The first electronic device sends a first request to the server, where the first request is used to request a time information set corresponding to the key information.

In this embodiment, the time information set is used to divide a search result receiving process of the first electronic device into a plurality of different receiving time periods, so that different search results are sequentially displayed on a display interface in a sequence of the receiving time periods. The time information set may be universal for different key information, or may be specially set for a piece of key information. This is not limited in embodiments.

In some embodiments, the time information set includes a plurality of different time thresholds, for example, {80 ms, 150 ms, 200 ms, 280 ms}. Based on the time information set, the first electronic device may use each time threshold as a boundary point of adjacent receiving time periods in a range less than a largest time threshold Tₘₐₓ, to determine a plurality of consecutive and non-overlapping receiving time periods. For example, receiving time periods (0 ms, 80 ms], (80 ms, 150 ms], (150 ms, 200 ms], and (200 ms, 280 ms] are determined in a range less than a largest time threshold 280 ms based on the time information set {80 ms, 150 ms, 200 ms, 280 ms}.

In some other embodiments, the time information set includes a plurality of consecutive and non-overlapping receiving time periods, for example, including {(0 ms, 80 ms], (80 ms, 150 ms], (150 ms, 200 ms] and (200 ms, 280 ms]}. In this example, each receiving time period may be referred to as a time slice, and the time information set may also be referred to as a time slice set.

S506: The server sends, based on the first request, the time information set corresponding to the key information to the first electronic device.

In some embodiments, for example, the key information is a keyword. A correspondence between various keywords and time information sets is preset in the server. After receiving the first request, the server searches for the correspondence based on the keyword in the first request, to determine a time information set corresponding to the keyword, and sends the time information set to the first electronic device.

Optionally, the first request not only carries the to-be-searched key information, but also carries device information of the first electronic device, for example, a device model and network signal strength. After receiving the first request, the server may determine the time information set of the keyword in combination with the device information of the first electronic device. For example, a stronger processing capability and stronger network signal strength of the first electronic device indicate that all time thresholds in the time information set of the first electronic device are smaller, or duration of each receiving time period in the time information set is shorter, so that the first electronic device quickly displays the received search result.

It should be noted that S505 and S506 are optional steps, that is, the first electronic device may alternatively use the local time information set, and does not obtain the local time information set from the server. The local time information set may be shared by different key information, or may be specially set for a different piece of key information. This is not limited in embodiments. In addition, the local time information set may be preset, or may be obtained from the server and stored locally when the key information is searched for previously.

Optionally, if the first electronic device is configured to store the time information set corresponding to the key information after searching for the key information first time, in S505 and S506, the first electronic device may first determine whether the to-be-searched key information (for example, the keyword) is searched for first time. If the key information is searched for the first time, the first electronic device sends the first request to the server. If the key information is not searched for the first time, the first electronic device does not send the first request to the server, that is, does not perform S505 and S506, but obtains the time information set locally.

S507: The first electronic device sends a search request to a plurality of search sources at a first moment, where the search request is used to request to search for the key information.

In this embodiment, the search source may be a local search module of the first electronic device, each second electronic device, the server, or the like. The local search module is configured to search local resource information of the first electronic device for resource information related to the key information. The second electronic device and the server are configured to search respective stored or accessible resource information for resource information related to the key information. For example, the resource information includes a picture, a file, an audio and a video, a web page, a setting item, an application, and the like.

S508: The first electronic device initializes time of a timer to T₀ at the first moment, where T₀=0. In other words, the first electronic device starts the timer at the first moment.

After initializing the timer, the first electronic device may clear a data buffer set of the first electronic device, or create a new data buffer set for the currently searched key information, to subsequently buffer a search result received in the current search process.

S509: The first electronic device continuously receives the search result from the first moment.

It should be noted that the process of receiving the search result includes a plurality of receiving time periods. In addition, due to factors such as processing performance and network signal strength of the search sources, search delays of returning search results by the search sources are usually different. In this embodiment, the search delay refers to a time difference between a sending moment (namely, the first moment) of the search request and a receiving moment of a search result. Generally, when a device has good processing performance and strong network signal strength, a search delay is short. However, when a device has poor processing performance or poor network signal strength, a search delay is long. Therefore, it may be understood that search results received by the first electronic device are usually distributed in the plurality of receiving time periods.

S510: The first electronic device determines whether the timer exceeds a time threshold Tᵢ in the time information set, where i=1, 2, 3... K.

In some embodiments, the time information set includes K time thresholds. After the time thresholds are ranked in ascending order, an i^{th} time threshold is Tᵢ. For example, in a time information set {80 ms, 150 ms, 200 ms, 280 ms}, T₁=80 ms, T₂=150 ms, T₃=200 ms, and T₄=280 ms.

In some other embodiments, when the time information in the time information set is a receiving time period, a maximum value of each receiving time period is the time threshold. In addition, in descending order of the receiving time periods, a maximum value of an i^{th} receiving time period is the time threshold Tᵢ. For example, in a time information set {(0 ms, 80 ms], (80 ms, 150 ms], (150 ms, 200 ms], (200 ms, 280 ms]}, time thresholds T₁=80 ms, T₂=150 ms, T₃=200 ms, and T₄=280 ms.

In S510, an initial time threshold of the timer is T₁, and the timer keeps timing and updates the time threshold to Tᵢ₊₁ each time after the timer exceeds Tᵢ. For example, after the timer exceeds T₁=80 ms, the time threshold is updated to T₂=150 ms; after the timer exceeds T₂=150 ms, the time threshold is updated to T₃=200 ms; and after the timer exceeds the time threshold T₃=200 ms, the time threshold is updated to T₄=280 ms. A maximum time threshold of the timer is Tₘₐₓ=T_{K}. For example, Tₘₐₓ=T₄=280 ms.

S511: If the timer exceeds the time threshold Tᵢ, the first electronic device displays, at an end of a search result display list according to a ranking policy, a search result received in a receiving time period (Tᵢ₋₁, Tᵢ].

The first electronic device usually displays the search results in a preset display sequence (for example, a top-to-bottom sequence or a left-to-right sequence), and actual potions at the end of the search result display list are different based on different display sequences.

In some embodiments, the first electronic device displays the received search results in a form of a list from top to bottom on a display interface. In this case, if no search result is displayed on the display interface, the display list is empty, and the end of the search result display list is actually a start position of the display list. If a search result is displayed on the display interface, the end of the search result display list is below the displayed search result.

In some other embodiments, the first electronic device displays the received search results in a form of a list from left to right on a display interface. In this case, if no search result is displayed on the display interface, the display list is empty, and the end of the search result display list is actually a start position of the display list. If a search result is displayed on the display interface, the end of the search result display list is on a right side of the displayed search result.

It should be noted that, in each receiving time period, whether the first electronic device can receive a search result and a quantity and a source of received search results need to be determined according to an actual situation. If the first electronic device receives no search result in a receiving time period, the first electronic device does not need to update the display interface when the receiving time period ends.

In S511, after the timer exceeds T₁, the first electronic device displays, at the start position of the search result display list according to the ranking policy, a search result received in (T₀, T₁], and updates the time threshold of the timer to T₂; and then after the timer exceeds T₂, displays, according to the ranking policy and after the search result received in (T₀, T₁], a search result received in (T₁, T₂], and updates the time threshold of the timer to T₃. The rest may be deduced by analogy. Until the timer exceeds Tₘₐₓ, the displaying ends.

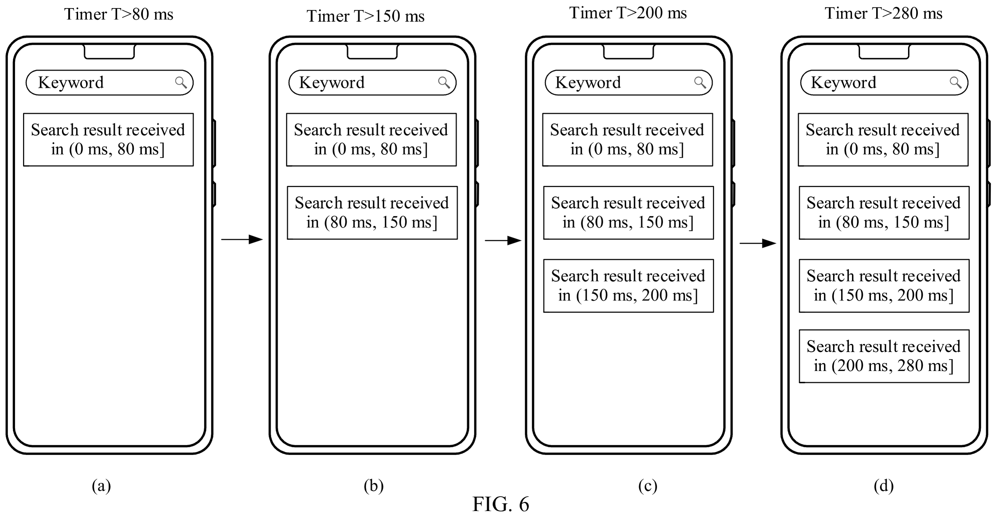

In this embodiment, the time information set {80 ms, 150 ms, 200 ms, 280 ms} is used as an example. It is assumed that the first electronic device receives a search result in each receiving time period. As shown in FIG. 6, a process in which the first electronic device displays the search result is as follows.

When the timer exceeds the time threshold T₁=80 ms, the first electronic device displays, according to the ranking policy, a search result received in (0 ms, 80 ms] at the end of the search result display list, specifically, at the start position of the display list.

When the timer exceeds the time threshold T₂=150 ms, the first electronic device displays, according to the ranking policy, a search result received in (80 ms, 150 ms] at the end of the search result display list, specifically below the search result received in (0 ms, 80 ms].

When the timer exceeds the time threshold T₃=200 ms, the first electronic device displays, according to the ranking policy, a search result received in (150 ms, 200 ms] at the end of the search result display list, specifically below the search result received in (80 ms, 150 ms].

When the timer exceeds the time threshold T₄=280 ms, the first electronic device displays, according to the ranking policy, a search result received in (200 ms, 280 ms] at the end of the search result display list, specifically below the search result received in (150 ms, 200 ms].

In addition, if the timer does not exceed the time threshold Tᵢ, S509 is returned to continue to receive the search result.

S512: The first electronic device determines whether the timer exceeds the maximum time threshold Tₘₐₓ.

If the timer exceeds the maximum time threshold Tₘₐₓ, the first electronic device controls the current search to end. In addition, if the timer does not exceed the maximum time threshold Tₘₐₓ, S509 is returned to continue to receive the search result.

According to the information search method provided in this embodiment, the first electronic device can sequentially display, on the display interface by using the receiving time period as a display unit, a search result in a corresponding receiving time period in descending order of the receiving time periods. It may be understood that, according to the method, it can be ensured that the first electronic device displays the received search result in time, and a jump of a display position of a displayed search result can also be avoided. This provides better user experience.

The following specifically describes a process in which the first electronic device displays the search result in each receiving time period according to the ranking policy in S511.

In this embodiment, the ranking policy is used to determine a search result display sequence. The ranking policy may be a single-level ranking policy, or may be a multi-level ranking policy. It should be noted that, a layer in the ranking policy in this embodiment refers to a division result of an operation and maintenance layer, for example, a service layer, a natural search layer, a device layer, and a delay layer. A ranking policy of each layer is specifically as follows.

### 1. Single-level ranking policy

### (1) Service-layer ranking policy

At the service layer, different search interfaces may return search results of different service types based on service scenarios provided by the search interfaces. The search interface may be understood as a search program in the electronic device, and different search interfaces are used to search for information from different sources. For example, the search interface may be a file search interface, an applet search interface, an online application search interface, or the like. In addition, the service types of the search results include a local file, a game, information, online music, and the like. The local file includes a picture, an audio and a video, a setting item, an application, an applet, and the like.

Based on this, a priority may be set for each service type. For example, a service type at the service layer may be further divided into n sub-levels, the n sub-levels are respectively *l*₁*, l*₂*, l*₃, ..., *l*ₙ*,* and one sub-level may include one or more different service types. Priorities of the sub-levels are in descending order in a sequence of *l*₁*, l*₂, *l*₃, ..., *lₙ.* For example, a sub-level *l*₁ includes the local file, a sub-level *l*₂ includes the game, a sub-level *l*₃ includes the information, and a sub-level *l*₄ includes the online music.

### (2) Natural-search-layer ranking policy

At the natural search layer, a search engine of each electronic device can calculate a search correlation s for each search result, where s ∈ [0,1], and send the search correlation s together with the search result to the first electronic device. The search correlation indicates a degree of correlation between the search result and the to-be-searched key information. A higher search correlation indicates a more accurate search result.

Based on this, the natural-search-layer ranking policy may be that a higher search correlation indicates a higher priority of a search result. For example, if a search correlation of a search result 1 is 0.9, a search correlation of a search result 2 is 0.6, and a search correlation of a search result 3 is 0.75, priorities are in descending order in a sequence of the search result 1, the search result 3, and the search result 2.

### (3) Device-layer ranking policy

At the device layer, different search results may be from different electronic devices, and different electronic devices have different device attributes. The device attribute includes a mobile phone, a server, a tablet computer, a smart screen, a notebook computer, an in-vehicle infotainment, and the like.

Based on this, at the device layer, different priorities may be configured for device attributes. For example, priorities are in descending order in a sequence of the mobile phone, the tablet computer, the smart screen, the notebook computer, the server, the in-vehicle infotainment, and another device. For example, if a search result A is from the mobile phone, a search result B is from the in-vehicle infotainment, and a search result C is from the tablet computer, priorities of the search results are in descending order in a sequence of the search result A, the search result C, and the search result B.

### (4) Delay-layer ranking policy

At a delay layer, different search results usually have different search delays. Based on this, a priority of a search result may be determined based on a search delay. For example, the delay-layer ranking policy is that a smaller search delay indicates a higher priority of a search result. For example, if a search delay of a search result D is 90 ms, a search delay of a search result E is 120 ms, and a search delay of a search result F is 100 ms, priorities are in descending order in a sequence of the search result D, the search result F, and the search result E.

### 2. Multi-level ranking policy

The multi-level ranking policy includes a plurality of single-level ranking policies with different priorities. When ranking the search results based on the multi-level ranking policy, the electronic device sequentially ranks the search results in descending order of priorities by using the single-level ranking policies.

For example, the multi-level ranking policy includes a service-layer ranking policy, a natural-search-layer ranking policy, a device-layer ranking policy, and a delay-layer ranking policy whose priorities are in descending order. If there are a plurality of to-be-ranked search results (for example, a plurality of search results received in a receiving time period), the first electronic device first ranks the search results according to the service-layer ranking policy. Then, if M search results have a same ranking position at the service layer, the M search results are ranked again according to the natural-search-layer ranking policy, where M≥2. If N search results have a same ranking position at the natural search layer, the N search results are ranked again according to the device-layer ranking policy, where M≥N≥2. If P search results have a same ranking position at the device layer, the P search results are further ranked according to the delay-layer ranking policy, where M≥N≥P≥2.

The following specifically describes, with reference to specific examples, a process in which the first electronic device ranks, according to the multi-level ranking policy, search results received in a receiving time period (Tᵢ₋₁, Tᵢ].

In an example, as shown in Table 1, the multi-level ranking policy of the first electronic device sequentially includes the service-layer ranking policy, the natural-search-layer ranking policy, the device-layer ranking policy, and the delay-layer ranking policy in descending order of priorities. In addition, search results received by the first electronic device in the receiving time period (80 ms, 150 ms] include a search result 1 to a search result 5, and basic attribute information of each search result is shown in Table 2.

**Table 1 Multi-level ranking policy**

| Policy name | Policy content |
|---|---|
| Service-layer ranking policy | Priorities of sub-levels are in descending order in a sequence of *l*₁*, l*₂*, l*₃*,* ..., *lₙ*. |
| | *l*₁ includes a local application, *l*₂ includes a setting item, a contact, a gallery, messaging, and an online game, *l*₃ includes flight-type information, and *l*₄ includes dictionary information and another online application. For details, refer to FIG. 7A. |
| Natural-search-layer ranking policy | A higher search correlation indicates a higher priority of a search result. |
| Device-layer ranking policy | Priorities are in descending order in a sequence of a mobile phone, a tablet computer, a smart screen, a notebook computer, a server, an in-vehicle infotainment, and another device. |
| Delay-layer ranking policy | A smaller search delay indicates a higher priority of a search result. |

**Table 2 Basic attribute information of search results**

| Basic attribute | Service type | Search correlation | Source device | Search delay |
|---|---|---|---|---|
| Search result 1 | Game | 0.8 | Mobile phone | 82 ms |
| Search result 2 | Local file | 0.7 | Mobile phone | 90 ms |
| Search result 3 | Game | 0.9 | Notebook computer | 100 ms |
| Search result 4 | Game | 0.8 | Tablet computer | 120 ms |
| Search result 5 | Game | 0.8 | Tablet computer | 140 ms |

In this example, a process in which the first electronic device uses the multi-level ranking policy shown in Table 1 to rank the search result 1 to the search result 5 shown in Table 2 is specifically shown as follows.

First, the first electronic device ranks the search result 1 to the search result 5 according to the service-layer ranking policy that "priorities of sub-levels are in descending order in a sequence of *l*₁*, l*₂*, l*₃, ..., *lₙ'',* to obtain a ranking result shown in Table 3-1. It should be noted that, in the ranking result presented in a table in this embodiment, each grid represents a ranking position, and priorities of the search results are in descending order in a sequence from top to bottom.

**Table 3-1 Ranking result**

| |
|---|
| Search result 2 |
| Search result 1, search result 3, search result 4, and search result 5 |

Subsequently, because ranking positions of the search result 1, the search result 3, the search result 4, and the search result 5 in the ranking result in Table 3-1 are the same, the search result 1, the search result 3, the search result 4, and the search result 5 are ranked again in descending order of search correlations, to obtain a ranking result shown in Table 3-2.

**Table 3-2 Ranking result**

| |
|---|
| Search result 2 |
| Search result 3 |
| Search result 1, search result 4, and search result 5 |

Then, because ranking positions of the search result 1, the search result 4, and the search result 5 in the ranking result in Table 3-2 are the same, the search results with the same ranking position need to be further ranked according to the device-layer ranking policy. For example, the device-layer ranking policy is "priorities of search results are in descending order in a sequence of source devices, which are sequentially a mobile phone, a tablet computer, a smart screen, a notebook computer, a server, an in-vehicle infotainment, and another device", and a ranking result shown in Table 3-3 may be obtained.

**Table 3-3 Ranking result**

| |
|---|
| Search result 2 |
| Search result 3 |
| Search result 1 |
| Search result 4 and search result 5 |

Finally, because ranking positions of the search result 4 and the search result 5 in the ranking result in Table 3-1 are the same, the search result 4 and the search result 5 need to be further ranked in ascending order of search delays according to the delay-layer ranking policy, and finally a ranking result shown in Table 3-4 is obtained.

**Table 3-4 Ranking result**

| |
|---|
| Search result 2 |
| Search result 3 |
| Search result 1 |
| Search result 4 |
| Search result 5 |

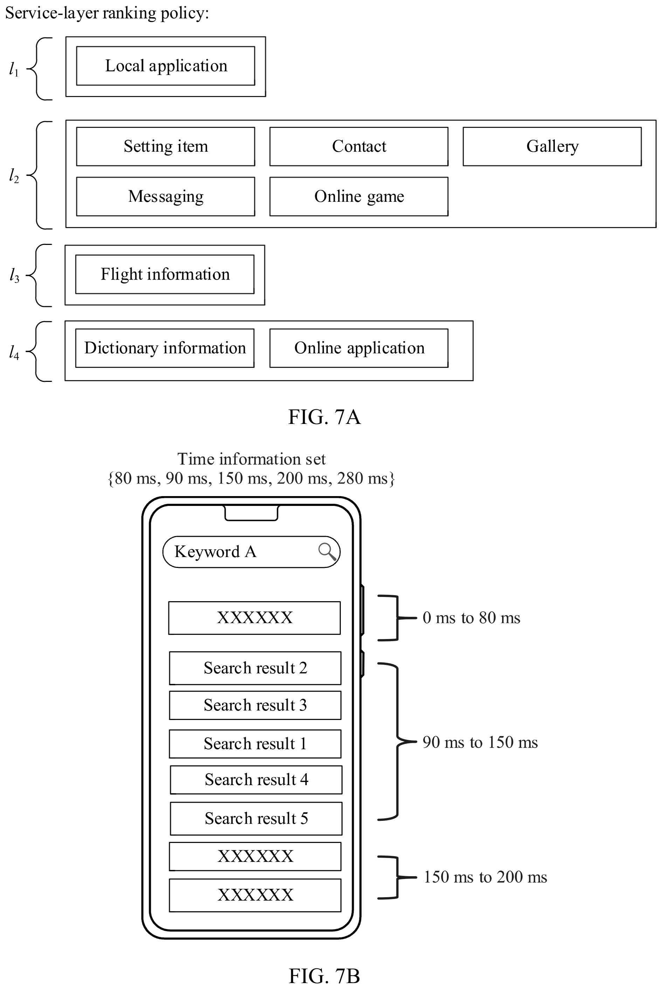

In this embodiment, the ranking result shown in Table 3-4 is a ranking result finally determined according to the multi-level ranking policy, and in the ranking result, positions of search results are different. Based on the ranking result, as shown in FIG. 7B, the first electronic device may sequentially display the search result 2, the search result 3, the search result 1, the search result 4, and the search result 5 in a top-to-bottom sequence in a display area of the receiving time period (80 ms, 150 ms].

The following describes the information search method provided in this application based on the key information, the time information set, and the ranking policy that are shown below.

To-be-searched key information: keyword A.

Time information set: {200 ms, 300 ms, 500 *ms,* 800 ms}.

Ranking policy: For details, refer to Table 1.

For ease of description, in this embodiment, a search result is referred to as a card. For example, a local application search result is referred to as a local application card, and a setting item search result is referred to as a setting card.

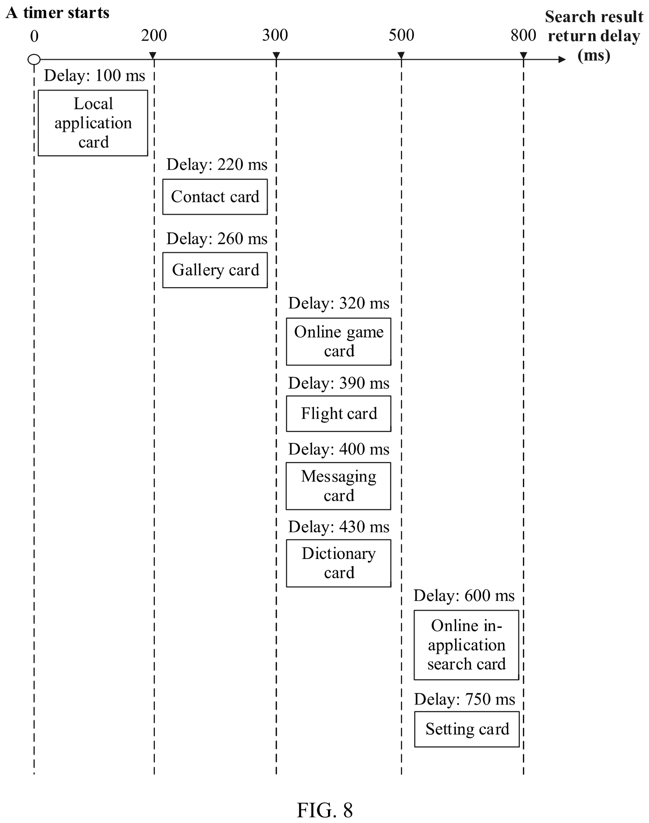

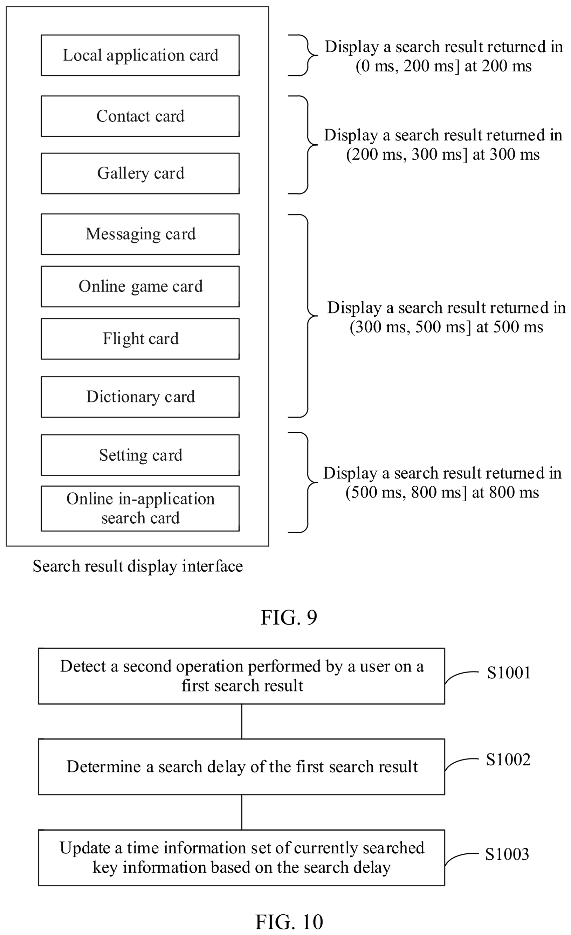

Refer to a diagram of a search delay of a search result shown in FIG. 8 and a diagram of displaying a search result shown in FIG. 9, in the information search method provided in this embodiment, a process of displaying a search result is specifically as follows.

In a 1 ^{st} receiving time period (0 ms, 200 ms], the first electronic device receives a "local application card" at 100 ms, and displays the "local application card" on the display interface at 200 ms.

In a 2^{nd} receiving time period (200 ms, 300 ms], the first electronic device receives a "contact card" at 220 ms, and receives a "gallery card" at 260 ms. Based on this, as shown in FIG. 9, the first electronic device sequentially displays the "contact card" and the "gallery card" below the "local application card" in a top-to-bottom sequence according to the multi-level ranking policy at 300 ms.

In a 3^{rd} receiving time period (300 ms, 500 ms], the first electronic device receives an "online game card" at 320 ms, receives a "flight card" at 390 ms, receives a "messaging card" at 400 ms, and receives a "dictionary card" at 430 ms. Based on this, as shown in FIG. 9, the first electronic device sequentially displays the "messaging card", the "online game card", the "flight card", and the "dictionary card" in a top-to-bottom sequence below the "gallery card" according to the multi-level ranking policy at 500 ms.

In a 4^{th} receiving time period (500 ms, 800 ms], the first electronic device receives an "online in-application search card" at 600 ms, and receives a "setting card" at 750 ms. Based on this, as shown in FIG. 9, the first electronic device sequentially displays the "setting card" and the "online in-application search card" below the "dictionary card" in a top-to-bottom sequence according to the multi-level ranking policy at 800 ms.

Finally, when search time exceeds the maximum time threshold 800 ms, the current search for the keyword A ends, and the first electronic device no longer receives and displays another search result.

To further improve user experience, for the currently searched key information, the first electronic device may further optimize the time information set of the key information based on an operation performed by the user on a search result.

FIG. 10 is a schematic flowchart of an information optimization method according to an embodiment of this application. As shown in FIG. 10, the method specifically includes the following steps S1001 to S1003.

S1001: A first electronic device detects a second operation performed by a user on a first search result.

In this embodiment, the first search result is a search result displayed by the first electronic device. The second operation performed by the user on the first search result includes: a tap operation, a setting operation, or the like performed by the user on the first search result.

S1002: The first electronic device determines a search delay of the first search result.

In an example, to-be-searched key information of the first electronic device is a "keyword B", a time information set of the "keyword B" is {80 ms, 150 ms, 200 ms, 280 ms}, and the first electronic device receives search results shown in Table 4.

**Table 4**

| Basic attribute | Label information | Service type | Search correlation | Source device | Search delay |
|---|---|---|---|---|---|
| Search result A | Label 1 | Other online application | 0.8 | Mobile phone | 60 ms |
| Search result B | Label 2 | Local file | 0.7 | Mobile phone | 72 ms |
| Search result C | Label 3 | Other online application | 0.9 | Notebook computer | 90 ms |
| Search result D | Label 1 | Other online application | 0.8 | Tablet computer | 140 ms |
| Search result E | Label 3 | Other online application | 0.8 | Tablet computer | 180 ms |

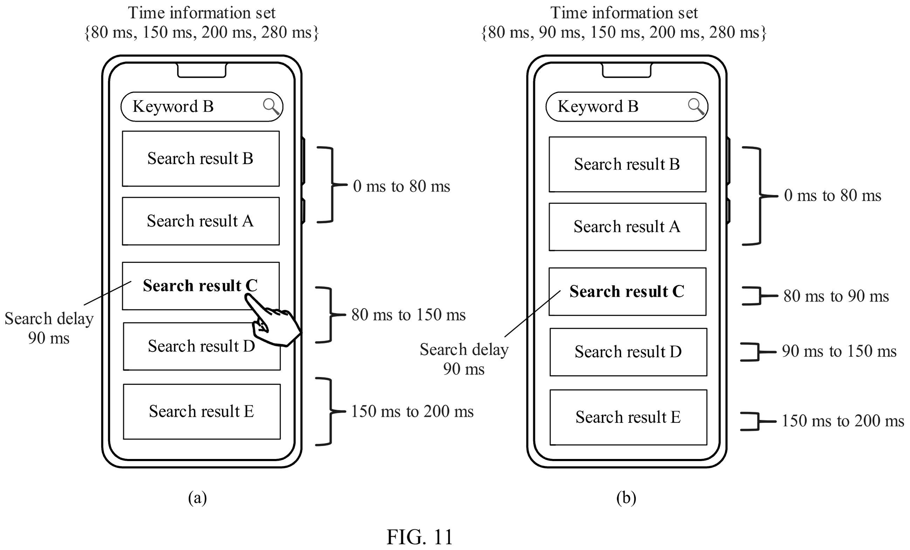

Based on this, as shown in (a) in FIG. 11, search results received in (0 ms, 80 ms], (80 ms, 150 ms], and (150 ms, 200 ms] are sequentially displayed from top to bottom on a current display interface of the first electronic device. Search results in (0 ms, 80 ms] sequentially include the "search result B" and the "search result A" from top to bottom. Search results in (80 ms, 150 ms] sequentially include the "search result C" and the "search result D" from top to bottom. A search result in (150 ms, 200 ms] includes the "search result E". In addition, because the first electronic device receives no search result in (200 ms, 280 ms], no search result in the receiving time period is displayed on the display interface of the first electronic device.

On the display interface, for example, in response to a tap operation performed by the user on the "search result C", the first electronic device determines a search delay of the "search result C", that is, 90 ms.

S1003: The first electronic device updates a time information set of currently searched key information based on the search delay.

It can be learned from the foregoing descriptions that, in the search process, the time information set may have different sources, for example, from the first electronic device locally, or from a server. Therefore, in S1003, based on different sources of the time information set, manners of updating the time information set of the key information by the first electronic device are different.

In some embodiments, each time the first electronic device searches for the key information, the first electronic device needs to obtain the time information set from the server. Based on this, the first electronic device needs to send a third request to the server, where the third request is used to request the server to update, based on the search delay of the first search result, the time information set corresponding to the current key information, so that the time information set is used to search for the key information a next time. For example, the third request carries an interactive feature vector of the user, and the interactive feature vector is generated by the first electronic device based on factors such as the first search result, the search delay of the first search result, and a user identifier (identifier, ID).

It may be understood that, in this embodiment, to optimize displaying of a search result based on a behavior habit of the user, the first request sent by the first electronic device to the server needs to carry a user ID of the first electronic device, so that before each time of searching for the key information, the time information set that matches the user can be obtained from the server.

In some other embodiments, each time the first electronic device searches for the key information, or when the first electronic device does not search for the key information first time, the first electronic device needs to locally obtain the time information set. Based on this, the first electronic device locally updates, based on the search delay, the time information set corresponding to the current key information. Certainly, the first electronic device may update the time information set corresponding to the key information locally, and update the time information set corresponding to the key information in the server. This is not limited in embodiments.

Based on different types of time information sets, a process in which the first electronic device/the server updates the time information set is specifically as follows.

When the time information set specifically includes a time threshold, the first electronic device/the server adds the search delay of the first search result as the time threshold to the time information set corresponding to the currently searched key information. For example, a current time information set of a keyword A is {80 ms, 150 ms, 200 ms, 280 ms}, and a search delay of a first search result of the keyword A is 90 ms. A time information set obtained by the first electronic device/the server through update is {80 ms, 90 ms, 150 ms, 200 ms, 280 ms}.

It should be noted that, after adding the time threshold to the time threshold set, the first electronic device/the server needs to rank time thresholds in the time threshold set in ascending order.

When the time information set specifically includes a receiving time period, the first electronic device/the server divides, based on the search delay of the first search result, a receiving time period in which the search delay is located in the current time information set into two non-overlapping receiving time periods. For example, the current time information set of the keyword A includes {(0 ms, 80 ms], (80 ms, 150 ms], (150 ms, 200 ms], (200 ms, 280 ms]}, and the delay of the first search result of the keyword A is 90 ms. A time information set obtained by the first electronic device/the server through update is {(0 ms, 80 ms], (80 ms, 90 ms], (90 ms, 150 ms], (150 ms, 200 ms], (200 ms, 280 ms]}.

After the time information set is optimized, as shown in (b) in FIG. 11, when the first electronic device searches for the "keyword C" next time, as shown in the figure, the received "search result C" may be displayed on the display interface at 90 ms, without waiting to be displayed after 150 ms. Because the search result C is an object that the user is interested in, improving a display speed of the search result C can further improve search experience of the user.

The first electronic device may further determine, after detecting a third operation performed by the user on a second search result, label information of the second search result, for example, a first label, and send a fourth request to each search source (such as a local search module, a second electronic device, or the server), where the fourth request carries a user ID and is used to request to improve a search correlation of a search result that corresponds to the user ID and has the first label. For example, the label information includes "movie", "news", "song", and the like. This is not limited in embodiments.

It should be noted that the second search result is any search result displayed by the first electronic device, and the second search result is the same as or different from the first search result shown above. The third operation performed by the user on the second search result includes a tap operation, a setting operation, or the like performed by the user on the second search result. The third operation and the first operation shown above are a same operation or different operations.

The search result A to the search result E shown in Table 4 are used as an example. In response to a second operation performed by the user on the "search result C", the first electronic device requests each search source to improve a search correlation between the currently searched key information and a search result having the "label 3". In an example, as shown in Table 5, a search engine of the search source increases a search correlation of the search result C from 0.9 to 0.95, and increases a search correlation of the search result E from 0.8 to 0.85.

**Table 5**

| Basic attribute | Label information | Before optimization | After optimization |
|---|---|---|---|
| | | Search correlation | Search correlation |
| Search result A | Label 1 | 0.8 | 0.8 |
| Search result B | Label 2 | 0.7 | 0.7 |
| Search result C | **Label 3** | **0.9** | **0.95** |
| Search result D | Label 1 | 0.8 | 0.8 |
| Search result E | **Label 3** | **0.8** | **0.85** |

Based on this, when searching for the "keyword B" next time, the first electronic device ranks search results according to the ranking policy based on an optimized search correlation.

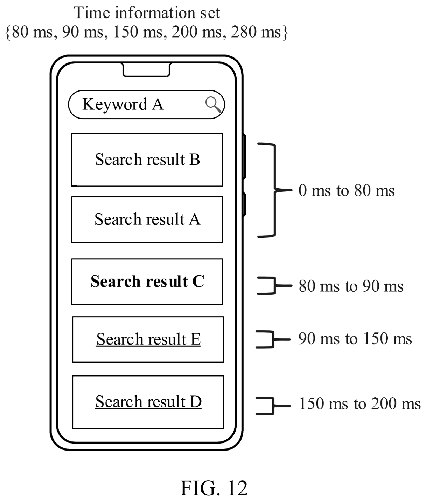

It is assumed that the first electronic device continues to search for the "keyword B" in next search, and obtains the search result A to the search result E shown in Table 6. For example, the first electronic device displays these search results by using an optimized time information set {80 ms, 90 ms, 150 ms, 200 ms, 280 ms}. A search result display interface of the first electronic device is shown in FIG. 12.

**Table 6 Basic attribute information of search results**

| Basic attribute | Service type | Search correlation | Source device | Search delay |
|---|---|---|---|---|
| Search result A | Other online application | 0.8 | Mobile phone | 60 ms |
| Search result B | Local file | 0.7 | Mobile phone | 72 ms |
| Search result C | Other online application | **0.95** | Notebook computer | 90 ms |
| Search result D | Other online application | 0.8 | Tablet computer | 140 ms |
| Search result E | Other online application | **0.85** | Tablet computer | 180 ms |

Through comparison between FIG. 12 and (a) in FIG. 11, it can be learned that, after the displaying of the search results is optimized based on a user interaction behavior, a display position of the "search result E" that the user is interested in is higher than that of the "search result D". This provides better user experience.

In conclusion, according to the method provided in this embodiment, the first electronic device may update the time information set and the search correlation based on a user behavior, to quickly display a search result that is highly matched with the user behavior when searching for the same key information next time, for example, a first search result "video recommendation" for a current operation of the user, so as to provide personalized display effect for the user, and improve user experience.

It should be understood that sequence numbers of the steps do not mean an execution sequence in the foregoing embodiments. The execution sequence of the processes should be determined based on functions and internal logic of the processes, and should not constitute any limitation on the implementation processes of embodiments of this application.

Based on a same inventive concept, in a specific implementation of the foregoing methods, this application further provides the following technical solutions.

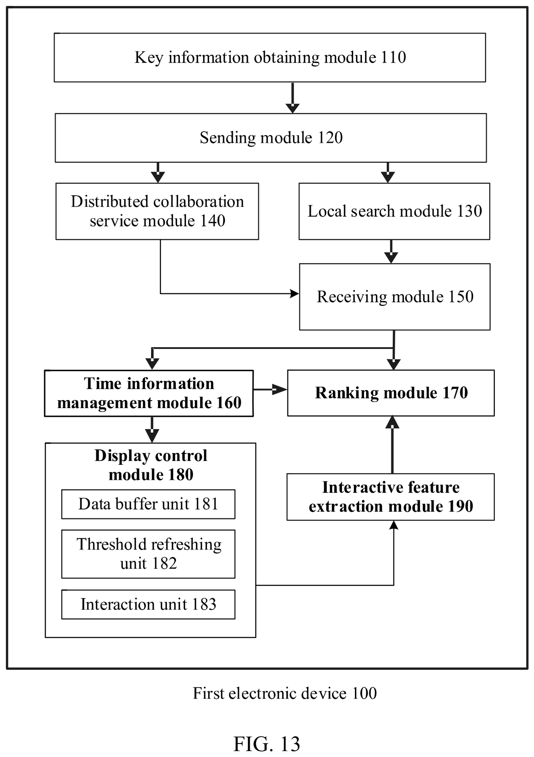

FIG. 13 is a diagram of a structure of a first electronic device 100 according to an embodiment of this application. As shown in FIG. 13, the first electronic device 100 includes a key information obtaining module 110, a sending module 120, a local search module 130, a distributed collaboration service module 140, a receiving module 150, a time information management module 160, a ranking module 170, a display control module 180, and an interactive feature extraction module 190.

The key information obtaining module 110 is configured to: provide an input interface for a search intention of a user, obtain to-be-searched key information through the input interface in a manner of a text, a voice, a picture, or the like, generate a search request based on the key information, and send the search request to the sending module 120. The search request is used to request to search for content related to the key information. In some implementations, as shown in FIG. 1 and FIG. 2, the input interface for the search intention of the user is displayed as a search box.

Optionally, the key information obtaining module 110 can further generate and send a first request and/or a second request to the sending module 120. The first request is used for a time information set corresponding to the key information. The second request is used to obtain a ranking policy of a search result.

The sending module 120 is a local communication apparatus, and is configured to send the search request to the local search module 130, the distributed collaboration service module 140, and the server 300 at a first moment after receiving the search request, to perform a global search through a search source. In addition, the sending module 120 is further configured to send the first request and/or the second request to the server 300 after receiving the first request and/or the second request.

The local search module 130 is a local search engine of the first electronic device, and is configured to search, based on the search request, a local resource for content related to the key information, and obtain a local search result; and send the local search result to the receiving module 150.

The distributed collaboration service module 140 is configured to implement discovery and interconnection between the first electronic device 100 and each second electronic device 200, so that a communication connection is established between the first electronic device 100 and each second electronic device 200 to transmit data. For example, the search request is sent to each second electronic device 200 connected to the first electronic device 100, and a search result returned by each second electronic device 200 is received. In addition, the distributed collaboration service module 140 is further configured to send the received search result to the receiving module 150.

The receiving module 150 is a local communication apparatus, and is configured to: receive a time information set sent by the server 300 based on the first request and the ranking policy of the search result sent based on the second request, and receive search results returned by search sources such as the local search module 130, each second electronic device 200, and the server 300. The time information set is used to determine each receiving time period in which the first electronic device receives a search result, to control a display occasion of the search result. The ranking policy is used to control a display sequence of the search result received in each search time period. In addition, the receiving module 150 is further configured to send the time information set of the current key information to the time information management module 160, and send the received ranking policy and search result to the ranking module 170.

The time information management module 160 is configured to: store and deliver the time information set corresponding to the current key information to the display control module 180, control the display occasion of the search result based on the time information set, and update the time information set based on a user operation. For details, refer to the following descriptions. Details are not described herein.

The ranking module 170 is configured to rank, based on the ranking policy, the search result received in each receiving time period, where the receiving time period is determined based on an indication of the time information management module 160. For details, refer to the following descriptions. Details are not described herein.

The display control module 180 includes a data buffering unit 181, a threshold refreshing unit 182, and an interaction unit 183. The data buffering unit 181 is configured to buffer the received search result. The threshold refreshing unit 182 has a built-in timer, and the timer can be started when the search request is sent, to determine and record a search delay of each search result based on return time of each search result, that is, determine duration from sending the search request to receiving the search result. In addition, the timer can also be used to update a time threshold based on the time information set, to control the display occasion of the search result. The interaction unit 183 is configured to display, at an end of a search result display list according to the ranking policy after the timer exceeds a time threshold Tᵢ, a search result received in a receiving period (Tᵢ₋₁, Tᵢ]. The time threshold Tᵢ is determined based on the time information set, i=1, 2, 3, ..., K, and K is a quantity of time thresholds determined based on the time information set. For details, refer to the foregoing descriptions. Details are not described herein.

The interactive feature extraction module 190 determines a search delay of a search result based on an operation performed by the user on the search result, and sends the search delay to the time information management module 160, so that the time information management module 160 updates the time information set of the current key information based on the search delay. For details, refer to the following descriptions. Details are not described herein.

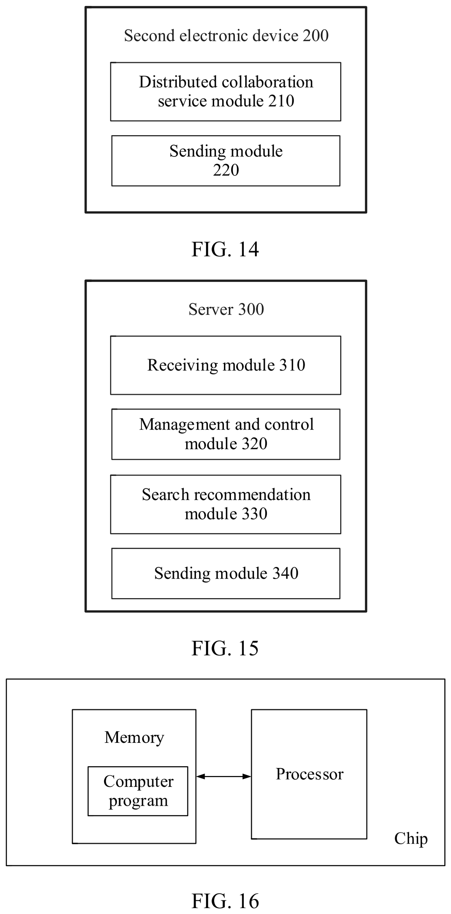

FIG. 14 is a diagram of a structure of a second electronic device 200 according to an embodiment of this application. As shown in FIG. 14, the second electronic device 200 includes a distributed collaboration service module 210 and a sending module 220. The distributed collaboration service module 210 is configured to implement discovery and interconnection between the second electronic device 200 and the first electronic device 100, and determine a corresponding search result in resource information of the second electronic device based on a search request. The sending module 220 is configured to send the search result to the first electronic device 100.

FIG. 15 is a diagram of a structure of a server 300 according to an embodiment of this application. As shown in FIG. 15, the server 300 includes a receiving module 310, a management and control module 320, a search recommendation module 330, and a sending module 340.

The receiving module 310 is configured to receive information sent by a first electronic device, for example, a first request, a second request, a search request, a third request, or a fourth request.

The management and control module 320 is configured to: manage a correspondence between key information (for example, a keyword) and a time information set, send a corresponding time information set to the first electronic device 100 based on the first request, send a ranking policy of a search result to the first electronic device 100 based on the second request, update the time information set based on the third request, and update, based on the fourth request, a search correlation between current key information and a search result having a first label.

The search recommendation module 330 is configured to determine a search result based on a search request. The sending module 340 is configured to send the ranking policy, the time information set, and the search result to the first electronic device 100.

An embodiment of this application further provides a chip. As shown in FIG. 16, the chip includes a processor and a memory. The memory stores a computer program. When the computer program is executed by the processor, the information search method in the foregoing embodiments is implemented.

An embodiment of this application further provides a computer-readable storage medium. The computer-readable storage medium stores a computer program. When the computer program is executed by a processor, the information search method provided in the foregoing embodiments is implemented.

An embodiment of this application further provides a computer program product. The program product includes a computer program, and when the computer program is run by an electronic device, the electronic device is enabled to implement the information search method provided in the foregoing embodiments.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In embodiments provided in this application, division into the frameworks or modules is merely logical function division and may be other division during actual implementation. For example, a plurality of frameworks or modules may be combined or integrated into another system, or some features may be ignored or not performed.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

It may be clearly understood by persons skilled in the art that, for convenient and brief description, for a detailed working process of the foregoing system, apparatus, and unit, refer to a corresponding process in the foregoing method embodiments. Details are not described herein again.

Reference to "one embodiment" or "some embodiments" described in the specification of this application means that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "contain", "have", and their variants all mean "include but are not limited to", unless otherwise specifically emphasized.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application, and these modifications and replacements shall fall within the protection scope of this application.

## Claims

1. An information search method, applied to a first electronic device, wherein the method comprises:
obtaining to-be-searched key information based on a first operation;
sending, to at least one search source at a first moment, a search request used to search for the key information;
receiving, in a plurality of receiving time periods from the first moment, a search result returned by the at least one search source based on the search request; and
displaying, at an end of a search result display list when each receiving time period ends, the search result received in the receiving time period.

2. The method according to claim 1, wherein after obtaining the to-be-searched key information based on the first operation, and before sending, to the at least one search source at the first moment, the search request used to search for the key information, the method further comprises:
sending a first request to a server, wherein the first request is used to obtain a time information set corresponding to the key information, and the time information set is used to determine the plurality of receiving time periods of the search result; and
receiving the time information set.

3. The method according to claim 2, wherein the time information set comprises K time thresholds Tᵢ that are sequentially arranged in ascending order, i=1, 2, ..., K, and K is greater than or equal to 2 and is an integer; and the plurality of receiving time periods comprise (Tᵢ₋₁, Tᵢ], and T₀=0.

4. The method according to claim 2 or 3, wherein the search result comprises a first search result, and the method further comprises:
determining a search delay for the first search result in response to a second operation for the first search result, wherein the search delay is a time difference between a receiving moment of the first search result and the first moment; and
updating the time information set based on the search delay, wherein an updated time information set is used to determine a plurality of receiving time periods of a search result when the key information is searched next time.

5. The method according to claim 4, wherein updating the time information set based on the search delay comprises:
sending a third request to the server, wherein the third request carries a user identifier of the first electronic device and is used to request the server to update, based on the search delay, the time information set corresponding to the user identifier; and/or
updating, based on the search delay, the time information set obtained by the first electronic device from the server.

6. The method according to claim 4 or 5, wherein when the time information set comprises a time threshold, updating the time information set based on the search delay comprises:
adding the search delay as the time threshold to the time information set.

7. The method according to any one of claims 1 to 6, wherein the key information comprises at least one of a text, a picture, and a voice.

8. The method according to any one of claims 1 to 7, wherein the search source comprises at least one of the first electronic device, a second electronic device, and the server; and
the first electronic device is communicatively connected to the second electronic device.

9. The method according to any one of claims 1 to 8, wherein displaying, at the end of the search result display list when each receiving time period ends, the search result received in the receiving time period comprises:
when each receiving time period ends, determining, according to a ranking policy, a ranking result of the search result received in the receiving time period; and
displaying, at the end of the search result display list based on the ranking result, the search result received in the receiving period.

10. The method according to claim 9, wherein the ranking policy comprises a single-level ranking policy and a multi-level ranking policy;
the single-level ranking policy comprises one ranking factor; and
the multi-level ranking policy comprises a plurality of ranking factors with different priorities.

11. The method according to claim 10, wherein the ranking factors of the multi-level ranking policy sequentially comprise, in descending order of the priorities, a service type, a search correlation, a source device, and a search delay; and
the search correlation indicates a degree of matching between the search result and the key information.

12. The method according to any one of claims 9 to 11, wherein the method further comprises:
sending a second request to the server, wherein the second request is used to obtain the ranking policy of the search result; and
receiving the ranking policy.

13. The method according to claim 11, wherein the search result comprises a second search result, and the method further comprises:
determining a first label of the second search result in response to a third operation for the second search result; and
sending a fourth request to the search source, wherein the fourth request comprises the user identifier of the first electronic device, and the fourth request is used to request to improve the search correlation between the key information and the search result that corresponds to the user identifier and has the first label.

14. An information search method, applied to a server, wherein the method comprises:
receiving a first request from a first electronic device, wherein the first request is used to obtain a time information set corresponding to to-be-searched key information, the time information set is used to determine a plurality of receiving time periods of a search result corresponding to the key information, and each receiving time period is used by the first electronic device to display, at an end of a search result display list when the receiving time period ends, the search result received in the receiving time period; and
sending the time information set to the first electronic device.

15. The method according to claim 14, wherein the method further comprises:
receiving a second request from the first electronic device, wherein the second request is used to obtain a ranking policy of the search result; and
sending the ranking policy to the first electronic device.

16. The method according to claim 14 or 15, wherein the method further comprises:
receiving a search request from the first electronic device, wherein the search request is used to request to search for the key information;
determining a search result based on the key information; and
sending the search result to the first electronic device.

17. The method according to any one of claims 14 to 16, wherein the method further comprises:
receiving a third request from the first electronic device, wherein the third request is used to request the server to update the time information set based on a search delay, and the search delay is a search delay of a first search result on which a second operation is performed; and
updating the time information set based on the search delay.

18. The method according to claim 17, wherein updating the time information set based on the search delay comprises:
when the time information set comprises a time threshold, adding the search delay as the time threshold to the time information set.

19. The method according to any one of claims 14 to 18, wherein the method further comprises:
receiving a fourth request from the first electronic device, wherein the fourth request is used to request to improve a search correlation between the key information and a search result having a first label, wherein
the search correlation indicates a degree of matching between the search result and the key information, and the first label is label information of a second search result on which a third operation is performed.

20. An electronic device, comprising a memory, a processor, and a computer program that is stored in the memory and that is runnable on the processor, wherein when executing the computer program, the processor implements the method according to any one of claims 1 to 13.

21. A server, comprising a memory, a processor, and a computer program that is stored in the memory and that is runnable on the processor, wherein when executing the computer program, the processor implements the method according to any one of claims 14 to 19.

22. A search system, comprising a first electronic device, at least one second electronic device, and a server, wherein
the first electronic device is configured to perform the method according to any one of claims 1 to 13;
the second electronic device is configured to: perform search based on a search request from the first electronic device, and return a search result; and
the server is configured to perform the method according to any one of claims 14 to 19.

23. A computer-readable storage medium, wherein the computer-readable storage medium stores a computer program, and when the computer program is executed by a processor, the method according to any one of claims 1 to 13 or any one of claims 14 to 19 is implemented.

24. A chip, wherein the chip comprises a processor and a memory, the memory stores a computer program, and when the computer program is executed by the processor, the method according to any one of claims 1 to 13 or any one of claims 14 to 19 is implemented.
